# EUROPEAN PATENT SPECIFICATION

(11) **EP 2 718 093 B1**
(45) Date of publication and mention of the grant of the patent: **01.04.2015**
(21) Application number: 12731724.6
(22) Date of filing: 06.06.2012
(51) Int. Cl.: B29D 35/00, B29D 35/06, B29D 35/08

(54) **Mould holder provided with a device to facilitate the operations of insertion/extraction of moulds**
Formhalter mit einer Vorrichtung zum Einsetzen/Herausziehen von Formen
Porte-moule équipé d'un dispositif servant à faciliter les opérations d'insertion et d'extraction des moules

(30) Priority: 07.06.2011 IT MI20111025
(43) Date of publication of application: 16.04.2014
(73) Proprietor: Wintech S.R.L., 30030 Mellaredo di Pianiga (VE) (IT)
(72) Inventor: MIOTTO, Alfonso, I-30030 Mellaredo Di Pianiga (VE) (IT); VAROTTO, Marco, I-30030 Mellaredo Di Pianiga (VE) (IT)
(74) Representative: Fisauli, Beatrice A. M.
(86) International application number: PCT/IB2012/052847
(87) International publication number: WO 2012/168876

(56) References cited:
- EP-A1- 1 157 814
- EP-B1- 1 047 544
- FR-A- 1 476 421
- IT-B- 1 172 753
- IT-B- 1 174 919

## Description

The subject of the invention is a particular configuration of a mold holder, for the molding of parts in thermoplastic material, reactive mixtures (vulcanized rubber, PU) in particular footwear, to facilitate mold insertion/removal operations from the front part of the mold holder, the front door thereof being mounted on a device adapted to make said door carry out a sequence of movements that move the door out of the front dimensions of the molds.

In the molding of reactive mixtures (such as vulcanized rubber, polyurethane), such as footwear, in particular boots, there are used turntable systems, on which there are housed a plurality of mold holders, which are carried, in sequence, to injectors for filling of the molds contained therein.

Said mold holders typically comprise a base and a cover, between which there are housed the molds for uppers. Moreover, in the front part of the mold holder there is positioned a rotating door which acts as support for the molds for soles. The door is rotating as its object is to carry, in sequence, two different molds, for each sole, as the soles are produced with two subsequent injections of different materials. The problem posed consists in the fact that the door blocks the front part of the mold holder, causing a considerable obstruction to mold insertion/removal operations.

The patent EP 1 047 544 solves this problem by means of a transverse frame, carried by the base of the mold holder, which is all below the level of the base of the mold holder and the door is pivoted on said transverse frame, with rotation axis out of the front dimensions of the molds. In these conditions, when the door is rotated on its hinges it no longer blocks the front part of the mold holder and, therefore, the molds can be easily inserted and removed.

However, the solution described in the patent EP 1 047 544 still has one drawback. In fact, the door, rotating on the pivots, frees the front part of the mold holder, but occupies space at the side of the mold holder, obstructing movements with the molds, carried out by personnel in charge or operations, and being a source of possible accidents.

The present invention solves this drawback as it proposes a solution, in conformity with claim 1, according to which the door carries out a downward translational motion, moving completely from the front part of the mold holders.

The mold holder according to the invention is of the type comprising a support base for the molds, a closing cover hinged thereto and a front support door for the molds of the soles, said door being rotating about a longitudinal axis. Said mold holder is provided with a device adapted to move the door out of the front dimensions of the molds, in order to facilitate mold insertion/removal operations, and is characterized in that said device comprises:
- a linear guide, integral with said shaft;
- a slide integral with the door;
- means adapted to make said slide travel with respect to said guide;
said door carrying out a rotation adapted to carry said guide and said slide into vertical position, so that, by operating said means, the door moves vertically downward, out of the front dimensions of the molds.

In this way, both the front part of the mold holder and the lateral parts of the mold holder are freed and therefore the door no longer constitutes an obstruction for mold insertion/removal operations.

It is evident that by adopting the solution proposed, this facilitates the work of personnel in charge of tooling the system and also eliminates a possible cause of accidents.

The invention shall now be described, by way of non-limiting example, according to a preferred embodiment and with reference to the accompanying figures, wherein:

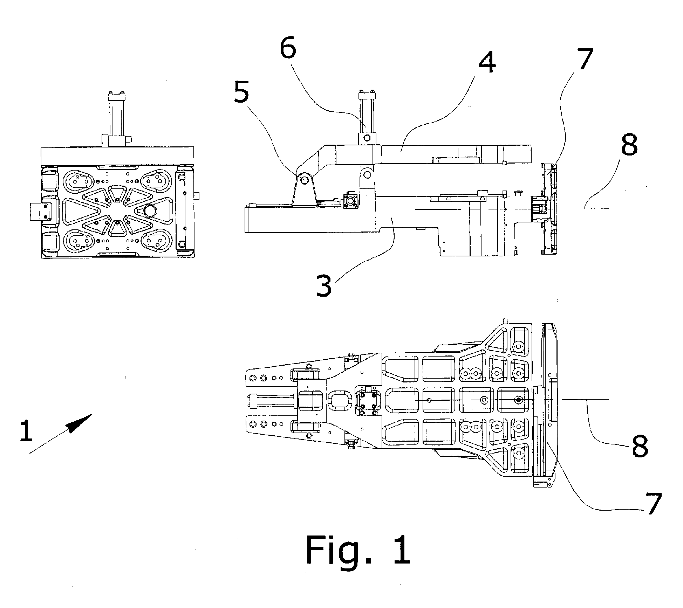

- Fig. 1 shows a mold holder according to the invention;
- Figs. 2 (a, b) show a device for movement of the door;
- Figs. 3, 4, 5, 6 and 7 show the sequence of movements carried out by the door to free the front part of the mold holder;
- Figs. 8 and 9 are perspective views of the mold holder with the door moved from the front part of the mold holder.

With reference to the figures, (1) indicates a mold holder for producing footwear, in particular boots, provided with a device (2) for movement of the door, according to the invention.

Said mold holder (1) comprises:
- a base (3), mounted on a rotating slide (not represented) which is part of a turntable system, of known type;
- a cover (4), pivoted in a point (5) of said base (3) and operated by hydraulic means (6), which closes over the mold (not represented);
- a door (7) on which there are mounted the molds (not represented) to produce soles, said door (7) being mounted on a shaft (8a) rotating about an axis (8), for the purpose of carrying, in sequence, the various molds required to produce the soles.

Being prior art, the mold holder (1) will not be further described.

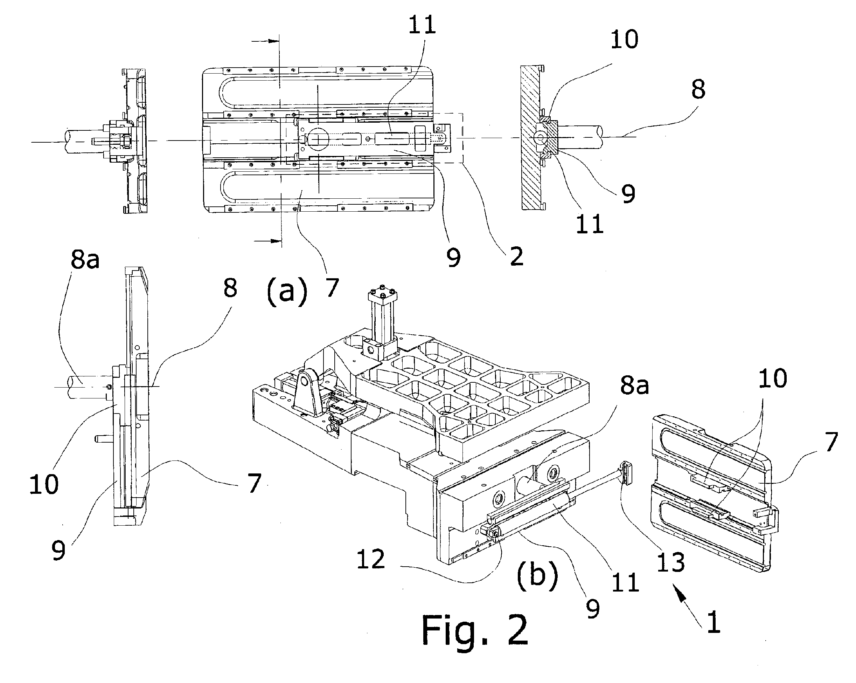

Said device (2), shown in Fig. 2, comprises:
- a linear guide (9), integral with said shaft (8a) with axis (8);
- a slide (10) integral with the door (7);
- means (11) adapted to make the slide travel (10) with respect to the guide (9).

Said means (11), adapted to make the slide travel (10) with respect to the guide (9), comprise a hydraulic actuator that acts between the guide (9) and the door (7). Said hydraulic actuator (11) is fixed, on the cylinder side, to the guide (9) by means of a threaded pin (12) and, on the rod side, to the door (7), by means of the interposition of a bracket element (13).

As the guide (9) is mounted in a cantilever fashion on the shaft (8a) and extends entirely on one side of the rotating door (7), the guide (9) will advantageously be produced in such a manner that it is as light as possible, while the bracket element (13) will advantageously be produced in such a manner as to balance the guide (9), also taking into account the presence of the hydraulic actuator (11). Balancing of the masses mounted on the shaft (8a) is advisable in order not to alter regular operation during rotation of the door (7) about the axis (8).

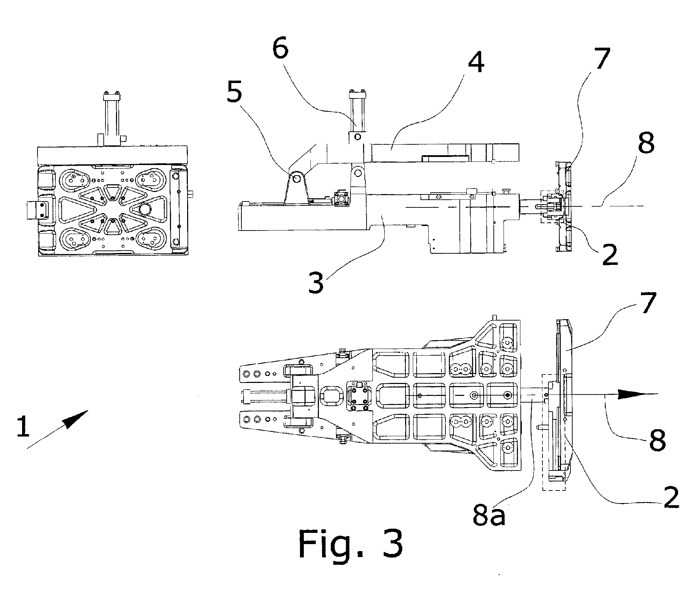

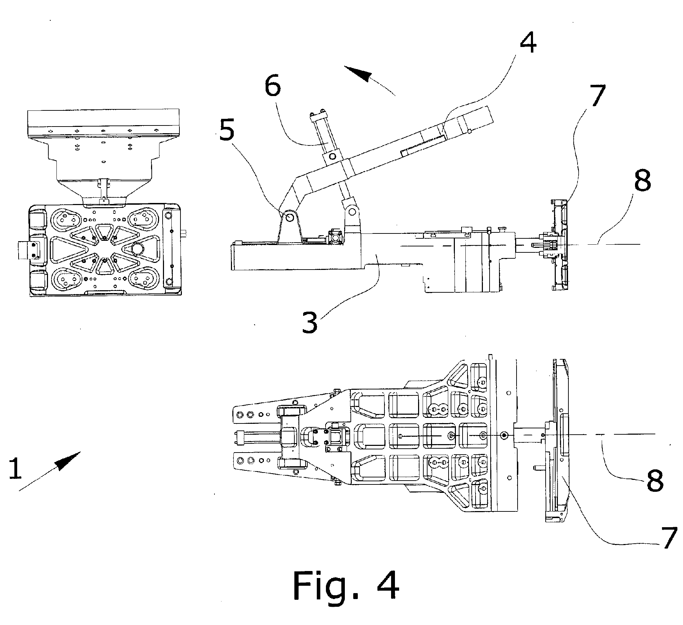

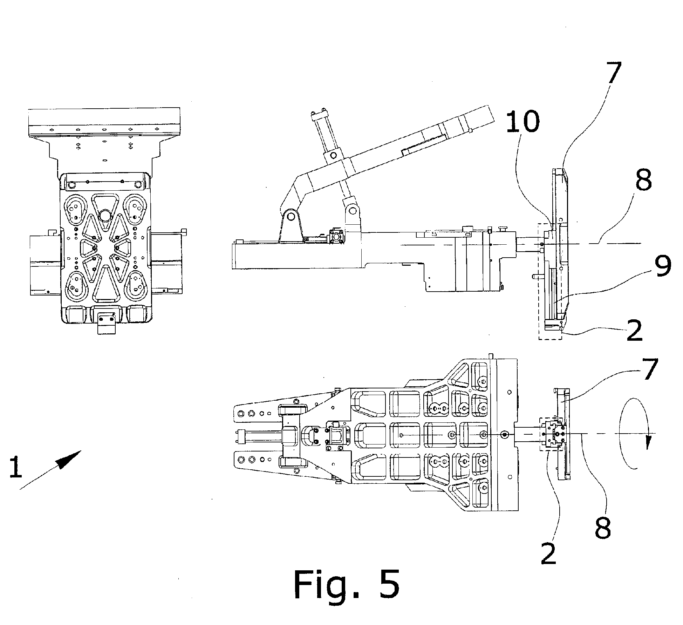

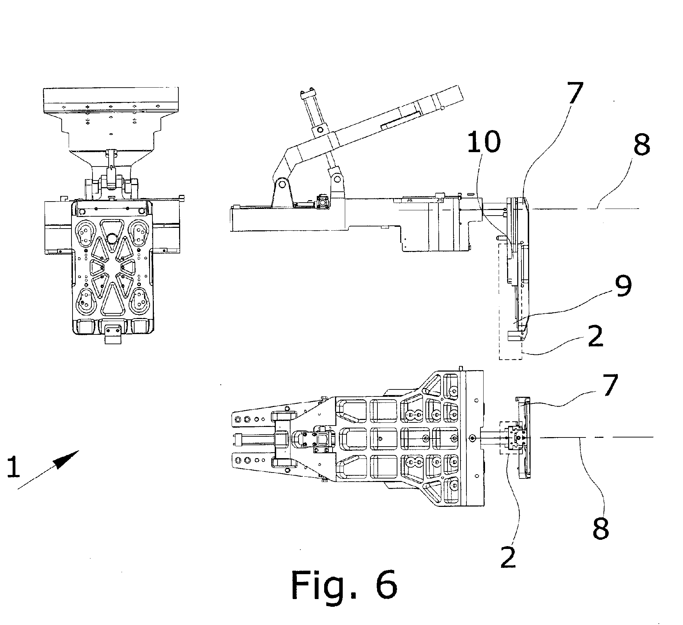

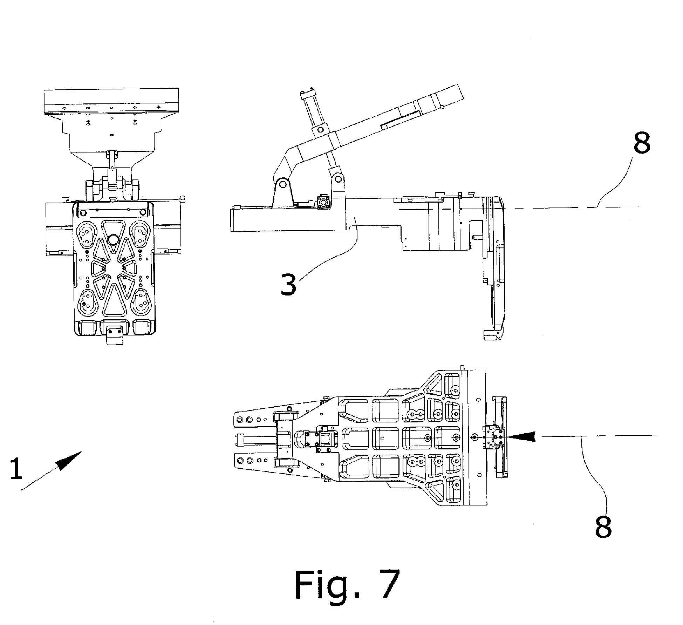

Figs. 3 to 7 show the sequence of movements carried out by the mold holder (1) to enable mold insertion/removal. In practice, the cover (4) is lifted, while the door (7), carrying out the movements described below, frees the front part of the mold holder (1):
- the shaft (8a) travels in the direction indicated by the arrow, moving the door (7) away from the base (3) of the mold holder (1) (Fig. 3);
- the cover (4) is lifted (Fig. 4);
- the door (7) rotates about the axis (8), carrying the guide (9) and the slide (10) of the device (2) into vertical position (Fig. 5);
- the device (2) is operated and the door (7) moves downward, out of the front dimensions of the molds (Fig. 6);
- the shaft (8a) retracts and the door (7) is positioned adjacent to the base (3) of the mold holder (1) (Fig. 7).

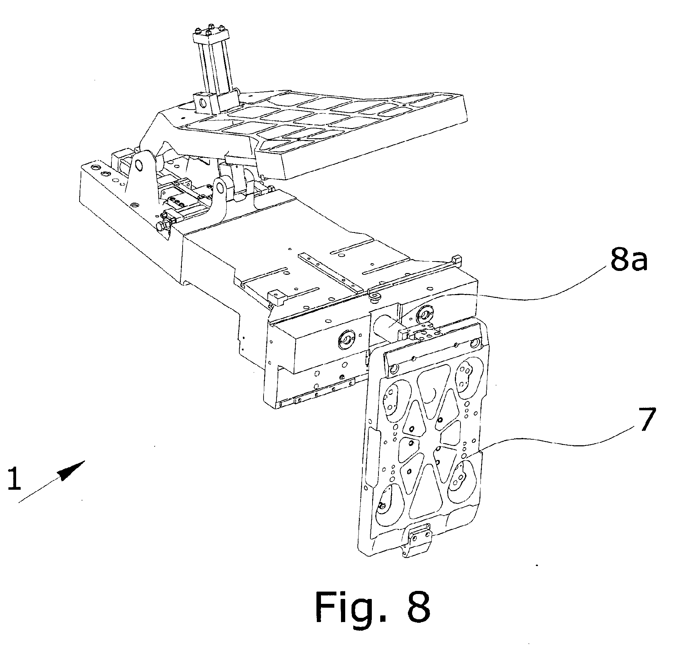

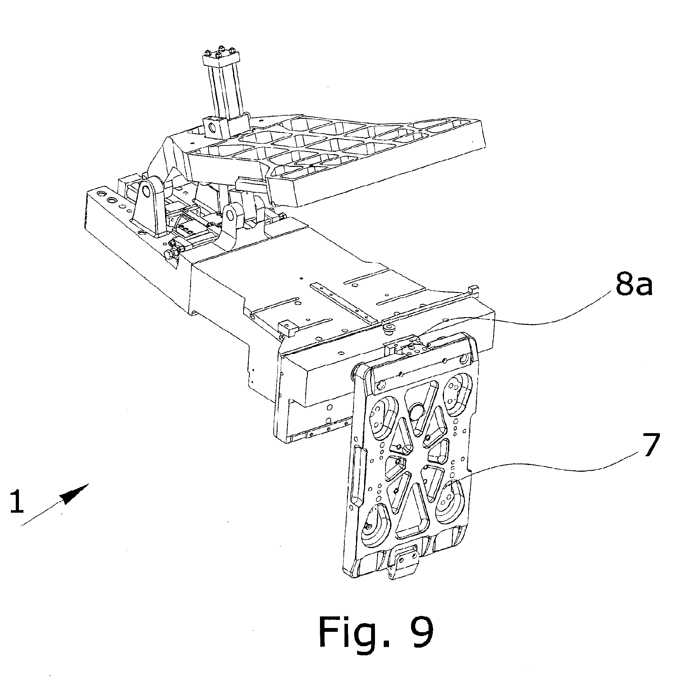

As is clear from Fig. 7 and from the subsequent Figs. 8 and 9, which are perspective views of the mold holder (1), at the end of the movement, the door (7), besides having freed the front part of the mold holder (1), thereby facilitating movement of the molds, is in a position that does not in any way obstruct personnel in charge of operations, thereby also reducing the risk of accidents.

In conformity with a second preferred embodiment (not represented), the device (2) can be produced inverting the position of the slide and of the guide. In practice, the guide (9) is made integral with the door (7), while the slide (10) is integral with the shaft (8a). Naturally, the actuator (11) always acts between guide (9) and door (7), just as in the embodiment described previously.

Finally, the actuator (11) can also be of pneumatic or mechanical type, for example of the nut and screw type or of the toothed wheel and rack type.

The invention has been described purely for illustrative and non-limiting purposes, according to a preferred embodiment. Those skilled in the art may find numerous other embodiments, all falling within the scope of protection of the claims below.

## Claims

1. A mold holder (1) for use in the molding of parts, in particular footwear, in thermoplastic material or reactive mixtures, comprising a support base (3) for the molds, with closing cover (4) hinged thereto and with front door (7) to support the molds of the soles, said door (7) being rotatable about a longitudinal axis (8), said mold holder (1) being provided with a device (2) adapted to move said door (7) out of the front dimensions of said molds, in order to facilitate mold insertion/removal operations, **characterized in that** said device (2) comprises:
• a linear guide (9);
• a slide (10), which travels on said guide (9);
• means (11) adapted to make said slide travel (10) with respect to said guide (9);
there being provided means adapted to carry said guide (9) and said slide (10) into vertical position, in such a manner that by operating said means (11), said door (7) moves vertically downward, out of the front dimensions of said molds.

2. The mold holder (1) according to claim 1, **characterized in that** said means, adapted to carry said guide (9) and said slide (10) into vertical position, comprise a shaft (8a), supported by the base (3) of said mold holder (1), which rotates about its axis (8).

3. The mold holder (1) according to claim 1, **characterized in that** it is provided with a counterweight, applied to said door (7), adapted to balance the eccentric masses due to the presence of said linear guide (9), of said slide (10), which travels on said guide (9), and of said means (11), adapted to make said slide travel (10) with respect to said guide (9).

4. The mold holder (1) according to claim 3, **characterized in that** said counterweight, applied to said door (7), comprises an element (13) for connection of said means (11) to said door (7).

5. The mold holder according to at least one of claims 1 to 4, **characterized in that** said means (11), adapted to make said slide travel (10) with respect to said guide (9), comprise a hydraulic actuator.

6. The mold holder according to at least one of claims 1 to 4, **characterized in that** said means (11), adapted to make said slide travel (10) with respect to said guide (9), comprise a pneumatic actuator.

7. The mold holder according to at least one of claims 1 to 4, **characterized in that** said means (11), adapted to make said slide travel (10) with respect to said guide (9), comprise a mechanical actuator of the nut and screw type or of the toothed wheel and rack type.

8. The mold holder according to claims 1 to 7, **characterized in that** said linear guide (9) is integral with said shaft (8a) with axis (8) and said slide (10) is integral with said door (7).

9. The mold holder according to claims 1 to 7, **characterized in that** said linear guide (9) is integral with said door (7) and said slide (10) is integral with said shaft (8a) with axis (8).

## Patentansprüche

1. Formhalter (1) zur Anwendung beim Spritzgießen von Teilen, insbesondere von Schuhwerk, aus Thermoplast oder aus reaktiven Mischungen, umfassend eine Auflagebasis (3) für die Formen, mit einem mit dieser gelenkartig verbundenen Schließdeckel (4) und mit einer frontalen Tür (7) zur Stütze der Schuhsohlen-Formen, wobei besagte Tür (7) um eine Längsachse (8) drehbar ist, wobei der Formhalter (1) mit einer Vorrichtung (2) ausgestattet ist, geeignet die besagte Tür (7) zu bewegen, um sie aus der frontalen Raumfläche der besagten Formen herauszubringen, damit das Einfügen/Herausnehmen der Formen erleichtert wird, gekennzeichnet durch die Tatsache, dass besagte Vorrichtung (2) Folgendes umfasst:
• eine lineare Schiene (9);
• einen Schlitten (10), der auf der besagten Schiene (9) gleitet;
• Mittel (11), die geeignet sind, den besagten Schlitten (10) in Bezug auf die besagte Schiene (9) gleiten zu lassen;
wobei Mittel vorgesehen sind, geeignet, die besagte Schiene (9) und den besagten Schlitten (10) in eine vertikale Lage zu versetzen, so dass sich bei Betätigung der besagten Mittel (11) die besagte Tür (7) vertikal nach unten verschiebt und aus der frontalen Raumfläche der besagten Formen herausbringt.

2. Formhalter (1) nach Anspruch 1, gekennzeichnet durch die Tatsache, dass besagte Mittel, geeignet, um die besagte Schiene (9) und den besagten Schlitten (10) in vertikale Lage zu versetzen, eine Welle (8a) umfassen, die von der Basis (3) des besagten Formhalters (1), der sich um seine eigene Achse (8) dreht, gestützt wird.

3. Formhalter (1) nach Anspruch 1, gekennzeichnet durch die Tatsache, dass ein Gegengewicht vorgesehen ist, das an der besagten Tür (7) angebracht ist, geeignet, die exzentrischen Massen auszubalancieren, die dem Vorhandensein der besagten linearen Schiene (9), des besagten Schlittens (10), der auf der besagten Schiene (9) gleitet, und der besagten Mittel (11), geeignet den besagten Schlitten (10) in Bezug auf die besagte Schiene (9) gleiten zu lassen, zuzuschreiben sind.

4. Formhalter (1) nach Anspruch 3, gekennzeichnet durch die Tatsache, dass besagtes Gegengewicht, das an der besagten Tür (7) angebracht ist, ein Element (13) zur Verbindung der besagten Mittel (11) mit der besagten Tür (7) umfasst.

5. Formhalter nach mindestens einem der Ansprüche von 1 bis 4, gekennzeichnet durch die Tatsache, dass besagte Mittel (11), geeignet besagten Schlitten (10) in Bezug auf besagte Schiene (9) gleiten zu lassen, einen hydraulischen Aktuator umfassen.

6. Formhalter nach mindestens einem der Ansprüche von 1 bis 4, gekennzeichnet durch die Tatsache, dass besagte Mittel (11), geeignet besagten Schlitten (10) in Bezug auf besagte Schiene (9) gleiten zu lassen, einen pneumatischen Aktuator umfassen.

7. Formhalter nach mindestens einem der Ansprüche von 1 bis 4, gekennzeichnet durch die Tatsache, dass besagte Mittel (11), geeignet besagten Schlitten (10) in Bezug auf besagte Schiene (9) gleiten zu lassen, einen mechanischen Aktuator des Schrauben-Mutter- oder Ritzel-Zahnstangen-Typs umfassen.

8. Formhalter nach den Ansprüchen von 1 bis 7, gekennzeichnet durch die Tatsache, dass die besagte lineare Schiene (9) fest mit der besagten Welle (8a) der Achse (8) verbunden ist und der besagte Schlitten (10) fest mit der besagten Tür (7) verbunden ist.

9. Formhalter nach den Ansprüchen von 1 bis 7, gekennzeichnet durch die Tatsache, dass die besagte lineare Schiene (9) fest mit der besagten Tür (7) verbunden ist und der besagte Schlitten (10) fest mit der besagten Welle (8a) der Achse (8) verbunden ist.

## Revendications

1. Porte-moule (1) à utiliser pour le moulage de pièces, notamment de chaussures, en matériau thermoplastique ou mélanges correspondants, comprenant une base d'appui (3) pour les moules, avec couvercle de fermeture (4) articulée sur cette dernière et avec une porte frontale (7) de support pour la moules des semelles, ladite porte (7) pivotant autour d'un axe longitudinal (8), ledit porte-moule (1) étant doté d'un dispositif (2) permettant de déplacer ladite porte (7) pour l'amener hors de l'encombrement frontal desdits moules, afin de faciliter les opérations d'introduction/extraction des moules, **caractérisé par le fait que** ledit dispositif (2) comprend :
• un guide linéaire (9) ;
• une glissière (10), qui coulisse sur ledit guide (9) ;
• des moyens (11) permettant de faire coulisser ladite glissière (10) par rapport audit guide (9) ;
des moyens permettant de porter ledit guide (9) et ladite glissière (10) en position verticale étant prévus, de sorte qu'en actionnant lesdits moyens (11), ladite porte (7) se déplace verticalement vers le bas, en se positionnant hors de l'encombrement frontal desdits moules.

2. Porte-moule (1) selon la revendication 1, **caractérisé par le fait que** lesdits moyens, permettant de porter ledit guide (9) et ladite glissière (10) en position verticale, comprennent un arbre (8a), soutenu par la base (3) dudit porte-moule (1), qui tourne autour de son propre axe (8).

3. Porte-moule (1) selon la revendication 1, **caractérisé par le fait qu'**il prévoit un contrepoids, appliqué sur ladite porte (7), permettant d'équilibrer les masses excentriques dues à la présence dudit guide linéaire (9), de ladite glissière (10), qui coulisse sur ledit guide (9), et desdits moyens (11), permettant de faire coulisser ladite glissière (10) par rapport audit guide (9).

4. Porte-moule (1) selon la revendication 3, **caractérisé par le fait que** ledit contrepoids, appliqué sur ladite porte (7), comprend un élément (13) de liaison desdits moyens (11) à ladite porte (7).

5. Porte-moule selon au moins l'une des revendications 1 à 4, **caractérisé par le fait que** lesdits moyens (11), permettant de faire coulisser ladite glissière (10) par rapport audit guide (9), comprennent un actionneur hydraulique.

6. Porte-moule selon au moins l'une des revendications 1 à 4, **caractérisé par le fait que** lesdits moyens (11), permettant de faire coulisser ladite glissière (10) par rapport audit guide (9), comprennent un actionneur pneumatique.

7. Porte-moule selon au moins l'une des revendications 1 à 4, **caractérisé par le fait que** lesdits moyens (11), permettant de faire coulisser ladite glissière (10) par rapport audit guide (9), comprennent un actionneur mécanique de type vis-vis sans fin ou de type pignon-crémaillère.

8. Porte-moule selon les revendications 1 à 7, **caractérisé par le fait que** ledit guide linéaire (9) est solidaire dudit arbre (8a) d'axe (8) et ladite glissière (10) est solidaire de ladite porte (7).

9. Porte-moule selon les revendications 1 à 7, **caractérisé par le fait que** ledit guide linéaire (9) est solidaire de ladite porte (7) et ladite glissière (10) est solidaire dudit arbre (8a) d'axe (8).
